Europäisches Patentamt

European Patent Office

Office européen des brevets

(11) Veröffentlichungsnummer: **0 341 683 B1**

# (12) EUROPÄISCHE PATENTSCHRIFT

(45) Veröffentlichungstag der Patentschrift: **04.11.92**

(51) Int. Cl.5: **B60N 2/02**, B60N 2/44

(21) Anmeldenummer: **89108382.6**

(22) Anmeldetag: **09.05.89**

(54) **Kopfstütze für Kraftfahrzeugsitze.**

(30) Priorität: **11.05.88 DE 3816167**

(43) Veröffentlichungstag der Anmeldung:
**15.11.89 Patentblatt 89/46**

(45) Bekanntmachung des Hinweises auf die
Patenterteilung:
**04.11.92 Patentblatt 92/45**

(84) Benannte Vertragsstaaten:
**AT DE ES FR GB IT SE**

(56) Entgegenhaltungen:
**DE-A- 2 928 473**
**DE-C- 3 711 498**
**FR-A- 2 236 345**
**FR-A- 2 377 545**

(73) Patentinhaber: **Butz, Eugen Otto**
**Krabbenburg 3**
**W-4010 Hilden(DE)**

(72) Erfinder: **Butz, Eugen Otto**
**Krabbenburg 3**
**W-4010 Hilden(DE)**

(74) Vertreter: **Ostriga, Harald et al**
**Stresemannstrasse 6-8 Postfach 20 13 27**
**W-5600 Wuppertal 2(DE)**

## Beschreibung

Die Erfindung betrifft eine Kopfstütze für Kraftfahrzeugsitze, wie sie in der nicht vorveröffentlichten deutschen Patentanmeldung DE-A-3 711 498 beschrieben ist.

Beim Gegenstand der deutschen Patentanmeldung DE-A-3 711 498 umringt eine U-Profil-Hohlschiene das Polster etwa äquatorartig über dessen gesamten Umfang und dient hierbei gewissermaßen als Kupplungselement für zwei bezugsseitige Überzugsränder, von denen jeder zu einem Ring angeordnete ringsegmentartige Randleisten trägt. Die ringsegmentartigen Randleisten sind mit Hakenelementen versehen, welche in bodenseitige Riegellöcher der U-Profil-Hohlschiene einrasten.

Zur Erzielung einer dichtschließenden praktisch übergangslosen Fuge in dem durch den Einsteckschlitz geprägten Verbindungsbereich der Überzugsränder ist es wichtig, daß die den Einsteckschlitz begrenzenden Seitenwände bzw. Seitenwandteile nach Herstellung der Steckverbindung - zumal durch den Einfluß relativ hoher sommerlicher Temperaturen in der Fahrgastzelle - nicht quer auseinanderfedern. Es würde sich ansonsten eine unschöne Fuge bilden. Aus diesem Grunde besteht die U-Profil-Hohlschiene gemäß der deutschen Patentanmeldung DE-A-3 711 498 aus einem relativ verformungsfesten zähen Kunststoff, beispielsweise aus Polyamid, während der Polsterträger für den Fall eines Aufpralls aus leichter verformbarem Kunststoff, beispielsweise aus Polyäthylen, besteht. Die auf die Seitenwände bzw. Seitenwandteile der U-Profil-Hohlschiene wirkenden Querkräfte sind relativ groß, weil das elastisch nachgiebige Polster nach Aufbringen des Bezugsstoffes von letzterem unter Vorspannung gehalten wird.

Ausgehend von der in der obengenannten, nicht vorveröffentlichten deutschen Patentanmeldung DE-A-3 711 498 beschriebenen Kopfstütze, liegt der Erfindung die Aufgabe zugrunde, eine Kopfstütze mit geringerem Herstellungs- und Montageaufwand zu schaffen, die außerdem beim praktischen Einsatz selbst bei relativ großen Bezugsstoffspannungen eine dichte, im wesentlichen übergangslose Fuge im Bereich des Einsteckschlitzes gewährleistet. Diese Aufgabe ist entsprechend dem Kennzeichenteil des Patentanspruchs 1 gelöst worden.

Entsprechend der Erfindung sind die den Einsteckschlitz begrenzenden Bereiche dem Polsterträger werkstoffeinheitlich angeformt. Die Seitenwände bzw. Seitenwandteile oder gegebenenfalls der Boden des Einsteckschlitzes sind daher integrale Bestandteile eines einheitlichen Kunststoff-Spritzgußkörpers. Da dieser Kunststoff-Spritzgußkörper zudem werkstoffeinheitlich mit ihm geformte Widerlager aufweist, welche die z.B. als Rippen ausgebildeten Wände bzw. Wandteile entgegen den durch die Randleisten in Richtung der Schlitzweite eingeleiteten Querkräften abstützen, kann der Polsterträger wie bisher aus leichter verformbarem energieverzehrenden Kunststoff, beispielsweise aus Polyäthylen, hergestellt werden. Demzufolge können sich die Seitenwände bzw. Seitenwandteile auch nicht bei höheren Fahrgastraum-Temperaturen im Sinne einer Weitung des Einsteckschlitzes, verbunden mit einer unschönen groben Fugenbildung zwischen den Bezugsrändern, auseinanderbewegen. Die Widerlager verhindern diesen Nachteil.

Entsprechend der Erfindung sind Druckwiderlager dadurch gebildet, daß außerhalb des Einsteckschlitzes, nämlich außen an den Rippen, sich quer zu diesen erstreckende in Umfangsrichtung aufeinanderfolgende Stützrippen oder Stützwülste werkstoffeinheitlich mit dem Polsterträger geformt sind.

Entsprechend der Erfindung können andererseits Zugwiderlager darin bestehen, daß im Tiefsten des Einsteckschlitzes, also im Abstand von den freien Kanten der Rippen, letztere in Querrichtung werkstoffeinheitlich miteinander verbindende Querrippen bezüglich des Umfanges des gepolsterten Körpers aufeinanderfolgend vorgesehen sind.

Auch ist es grundsätzlich möglich, mit Haken versehene Randleisten gemäß der älteren deutschen Patentanmeldung DE-A-3 711 498 und entsprechende Riegellöcher innerhalb des Einsteckschlitzes (seitenwand- oder bodenseitig) vorzusehen. Beispielsweise können die Seitenwandrippen unmittelbar von einer von der Sitzlehne weg nach oben weisenden glatten Dach- bzw. Scheitelfläche des Polsterträgers vorragen, während die Riegellöcher z.B. die Dachfläche unmittelbar durchsetzen. Auch könnte die U-Profil-Hohlschiene gemäß der deutschen Patentanmeldung DE-A-3 711 498 unter Bildung von rippenartigen Druckwiderlagern werkstoffeinheitlich an den Polsterträger angespritzt sein.

Weitere Erfindungsmerkmale ergeben sich aus zusätzlichen Unteransprüchen.

In den Zeichnungen ist ein bevorzugtes Ausführungsbeispiel entsprechend der Erfindung näher dargestellt, es zeigen:

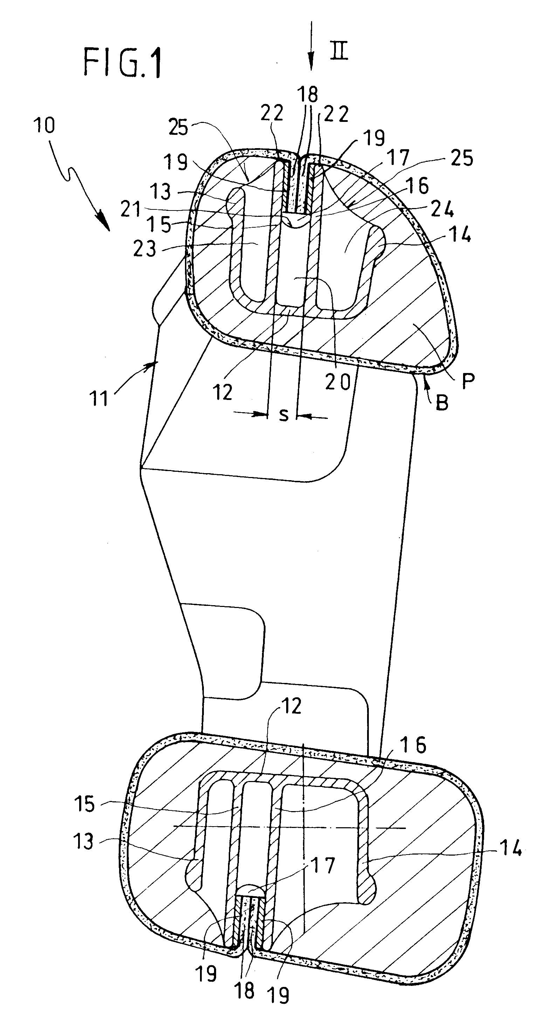

Fig. 1 einen unter Weglassung der Haltestangen durch einen rahmenartigen Kopfpolsterträger etwa radial geführten Querschnitt; diesem Querschnitt ist eine mehr schematisch dargestellte Polsterung mit Überzugsstoff (ansonsten nicht in Ansicht gezeigt) zugeordnet,

Fig. 2 unter Weglassung von Polster und Bezugsstoff - lediglich die Überzugsränder und Randleisten sind gestrichelt dargestellt - eine beidendig abgebrochene Draufsicht auf den Polsterträger, und

Fig. 3 in grundsätzlicher Anlehnung an die Darstellung gemäß Fig. 1 einen etwas vergrößerten Teilbereich des Einsteckschlitzes mit bodenseitigen Riegellöchern.

Die Kopfstütze für Kraftfahrzeugsitze, deren Tragstangen nicht dargestellt sind, ist insgesamt mit der Bezugsziffer 10 bezeichnet.

Die Kopfstütze 10 stellt in der gezeigten Form einen gepolsterten Körper dar, der als tragendes Gerüst einen Polsterträger 11 enthält, der ein stoffschlüssig zusammenhängendes Kunststoff-Spritzgußteil, beispielsweise aus Polyäthylen, bildet.

Der Polsterträger 11 ist als Rahmen für eine eine zentrale Durchschauöffnung aufweisende Kopfstütze 10 ausgeführt.

Der Polsterträger 11 bildet im dargestellten Querschnittbereich ein nach außen geöffnetes gegliedertes rinnenartiges Profil mit einem Profilboden 12 und zwei Außenstegen 13, 14.

Werkstoffeinheitlich am Profilboden 12 angeschlossen ragen von diesem zwei Seitenwandrippen 15, 16 vor. Die Innenflächen der Seitenwandrippen 15, 16 bilden zwischen sich einen Einsteckschlitz 17 für Überzugsränder 18 mit innenseitig angenähten Randleisten 19, die langrechteckigen Querschnitt aufweisen, jeweils beispielsweise etwa 1mm dick und etwa 10-15mm breit sind und die sich gemeinsam mit den Überzugsrändern 18 unter Vermeidung einer Montagefuge aneinander verriegeln bzw. sich gegenseitig blockieren.

Die summierten Querbreiten bzw. Werkstoffstärken der beiden Überzugsränder 18 und der beiden Randleisten 19 sind etwas größer als die mit s bezeichnete Querweite des Einsteckschlitzes 17.

Der Einsteckschlitz 17 ist dadurch formstabil, daß zwischen den beiden Seitenwandrippen 15, 16 angeordnete Zugwiderlager in Form von werkstoffeinheitlich angeschlossenen Querrippen 20 vorgesehen sind. Die Querrippen 20 folgen - bezüglich des Umfanges der Kopfstütze 10 - in Abständen aufeinander.

Die nach außen weisende Schmalfläche 21 der Querrippe 20 erstreckt sich in Rippenlängsrichtung konkav und ist zudem im Abstand von den freien abgerundeten Kanten 22 der Seitenwandrippen 15, 16 nach innen hinein zurückverlagert, so daß sich eine für die Aufnahme der Bezugsränder 18 mit Randleisten 19 erforderliche Schlitztiefe ergibt.

Beginnend an den Außenseiten der abgerundeten Schmalflächen 22 der Seitenwandrippen 15, 16 sind andererseits zwischen letzteren und den Außenstegen 13, 14 in Druckrichtung belastbare Stützrippen 23, 24 (werkstoffeinheitlich angeformt) vorgesehen, deren nach außen weisende Schmalflächen 25 sich in Rippenlängsrichtung ebenfalls konkav erstrecken. Diese Stützrippen, welche dank ihrer konkaven Konturierung sehr hoch an den Seitenwandrippen 15, 16 ansetzen können, stützen die Seitenwandrippen 15, 16 besonders effektiv ab. Die konkave Rippenkonturierung schafft zudem einen genügend großen Aufnahmeraum für den Polsterkörper P.

Es ist vorstellbar, daß die Seitenwandrippen 15, 16 - und damit die Weite s des Einsteckschlitzes 17 - durch die als Zugwiderlager wirkenden Querrippen 20 sowie durch die als Stützwiderlager wirkenden Stützrippen 23, 24 gegen starke Querkraftbelastungen stabilisiert sind. Derartige Querkraftbelastungen sind vorhanden, da der Polsterkörper P zur Erzielung eines strammsitzenden Bezuges B unter Vorspannung gehalten ist, während die Bezugsränder 18 mit ihren Randleisten 19 innerhalb des Einsteckschlitzes 17 positioniert sind.

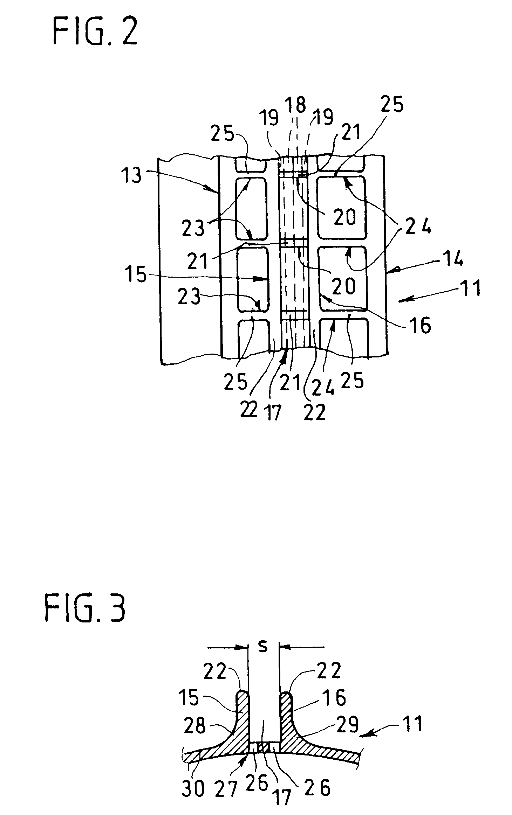

In der alternativen Darstellung der Fig. 3 sind als Druckwiderlager Stützwülste 28, 29 vorgesehen, die sich außen entlang der Seitenwandrippen 15, 16 erstrecken. Gemäß Fig. 3 bildet die ansonsten glattflächige Dach- bzw. Scheitelwand 30 des Polsterträgers 11 auch einen Boden 27 des Einsteckschlitzes 17, welcher mit Riegellöchern 26 (Durchbrechungen) zur Aufnahme von Riegelhaken der Randleisten gemäß der DE-Patentanmeldung P 37 11 498 versehen ist. Selbstverständlich ist es auch möglich, die Riegellöcher bei entsprechender Abwandlung der Riegelhaken seitlich innen innerhalb der Seitenwandrippen 15, 16 vorzusehen.

Der Einsteckschlitz 17 umgibt die Kopfstütze 10 etwa äquatorartig.

Es ist selbstverständlich, daß die Erfindung nicht auf eine Rahmenkopfstütze beschränkt sein muß; vielmehr ist die Erfindung auch bei Vollpolster-Kopfstützen anwendbar.

Allen Ausführungsformen ist gemeinsam, daß die Höhenlage der freien Kante bzw. Schmalseite 22 jeder Seitenwandrippe 15, 16 zugleich die Höhe und die partielle Kontur des Polsters bestimmt.

**Patentansprüche**

1.   Kopfstütze (10) für Kraftfahrzeugsitze, mit einem gepolsterten Körper (P), mit einem darin enthaltenen Polsterträger (11), mit einem den Polsterträger (11) umgebenden, einen Polsterüberzug (B) aufweisenden Polster sowie mit einem in den gepolsterten Körper (P) eingelassenen und diesen etwa äquatorartig umringenden etwa radial nach außen offenen Einsteckschlitz (17), innerhalb welchem zur Verbindung von zwei das Polster ringförmig umgebenden Polsterüberzugsrändern (18) an letzteren befestigte Randleisten (19) gehalten sind, wobei der Einsteckschlitz (17) zwischen zwei etwa im Parallelabstand voneinander angeordneten, mit ihren freien Kanten (22) etwa radial nach außen weisenden Wänden bzw. Wandteilen (15, 16) gebildet und gegebenenfalls von einem Boden (12; 27) begrenzt ist, dadurch gekennzeichnet, daß die Wände bzw. die Wandteile (15, 16) und gegebenenfalls auch der Boden (27) unmittelbar werkstoffeinheitlich angeformte Bereiche (15, 16, 27), wie z.B. Rippen (15, 16), des Polsterträgers (11) sind, welchen ebenfalls werkstoffeinheitlich mit dem Polsterträger (11) verbundene Widerlager (20; 23; 24) zugeordnet sind, welche durch die Randleisten (19) in Richtung der Schlitzweite (s) eingeleitete Querkräfte aufnehmen.

2. Kopfstütze nach Anspruch 1, dadurch gekennzeichnet, daß außerhalb des Einsteckschlitzes (17), nämlich außen an den Rippen (15, 16), als Druckwiderlager sich quer zu den Rippen (15, 16) erstreckende im Umfangsabstand aufeinanderfolgende Stützrippen (23, 24) oder Stützwülste (28, 29) werkstoffeinheitlich mit dem Polsterträger (11) ausgebildet sind.

3. Kopfstütze Anspruch 1 oder nach Anspruch 2, dadurch gekennzeichnet, daß im Tiefsten des Einsteckschlitzes (17), also im Abstand von den freien Kanten (22) der Rippen (15, 16), letztere in Querrichtung (s) werkstoffeinheitlich miteinander verbindende im Umfangsabstand aufeinanderfolgende Querrippen (20) angeordnet sind, die Zugwiderlager bilden.

4. Kopfstütze nach Anspruch 3, dadurch gekennzeichnet, daß Querrippen (20) und Stützrippen (23, 24) versetzt bzw. auf Lücke zueinander angeordnet sind.

5. Kopfstütze nach einem der Ansprüche 1 bis 4, dadurch gekennzeichnet, daß sich die nach außen weisenden Schmalflächen (21; 25) der Querrippen (20) und Stützrippen (23, 24) in deren Rippenlängsrichtung konkav erstrecken.

## Claims

1. Head restraint (10) for a motor vehicle seat, with a padded body (P), with a cushion support (11) contained therein, with a cushion surrounding the cushion support (11) and having a cushion cover (B), and with a plug-in slot (17), which is countersunk into the padded body (P) and surrounds it approximately equatorially and which is approximately radially open to the outside, and inside which edge strips (19) for joining two cushion cover edges (18) annularly surrounding the cushion are fixed to said cushion cover edges (18), wherein the plug-in slot (17) is formed between two walls or wall parts (15, 16), which are spaced apart approximately parallel to one another and face approximately radially outwards with their free edges (22), and is optionally defined by a base (12; 27), characterised in that the walls or wall parts (15, 16) and optionally the base (27) are directly integrally formed regions (15, 16, 27), such as ribs (15, 16) for example, of the cushion support (11) and have abutments (20; 23; 24), which are likewise integral with the cushion support (11) and which absorb transverse forces generated by the edge strips (19) in the direction of the slot width (s).

2. Head restraint according to claim 1, characterised in that outside the plug-in slot (17), in particular on the exterior of the ribs (15, 16), support ribs (23, 24) or support bumps (28, 29), which are spaced in series in the circumferential direction and extend as pressure abutments transverse to the ribs (15, 16), are integrally formed with the cushion support (11).

3. Head restraint according to claim 1 or claim 2, characterised in that transverse ribs (20), which are spaced in series in the circumferential direction and which are located in the deepest part of the plug-in slot (17), i.e. with clearance from the free edges (22) of the ribs (15, 16), join the latter together integrally in the transverse direction (s) and form tension abutments.

4. Head restraint according to claim 3, characterised in that transverse ribs (20) and support ribs (23, 24) are arranged in an offset manner or spaced apart.

5. Head restraint according to one of claims 1 to 4, characterised in that the outward-facing narrow faces (21; 25) of the transverse ribs (20) and support ribs (23, 24) extend concavely in their rib longitudinal direction.

## Revendications

1. Appuie-tête (10) pour sièges de véhicules automobiles, comprenant un corps rembourré (P) muni d'un support de coussin (11) contenu dans ce corps, un coussin enveloppant le support de coussin (11) et présentant un revêtement de coussin (B), ainsi qu'une fente d'emboîtement (17), ménagée dans le corps rembourré (P), et qui encercle ce dernier à peu près dans sa région équatoriale, et s'ouvre à peu près radialement vers l'intérieur, fente à l'intérieur de laquelle, pour assembler deux bords (18) du revêtement du coussin qui entoure le coussin avec une forme annulaire, sont retenues des bordures (19) fixées à ces bords, la fente d'emboîtement (17) étant formée entre deux parois latérales ou parties de parois latérales (15, 16) disposées à peu près à un écartement mutuel parallèle, et qui pointent à peu près radialement vers l'extérieur par leur bord libre (22), et étant éventuellement limitée par un fond (12 ; 27), caractérisé en ce que les parois latérales ou parties de parois latérales (15, 16) et éventuellement aussi le fond (27) sont des régions (15, 16, 27) comme, par exemple des nervures (15, 16), directement venues de matière par moulage, du support de coussin (11), auxquelles sont associés des étais (20 ; 23 ; 24), eux aussi venus de matière avec le support de coussin (11), qui absorbent les forces transversales introduites par les bordures (19) dans la direction parallèle à la largeur (s) de la fente.

2. Appuie-tête selon la revendication 1, caractérisé en ce qu'en dehors de la fente d'emboîtement (17), plus précisément à l'extérieur le long des nervures (15, 16), sont formés, en qualité d'étais travaillant à la compression, des nervures d'étayage (23, 24) qui s'étendent transversalement aux nervures (15, 16), et se succèdent le long de la périphérie à un certain écartement, ou des bourrelets d'étayage (28, 29) et qui sont venus de matière avec le support de coussin (11).

3. Appuie-tête selon la revendication 1 ou la revendication 2, caractérisé en ce qu'au point le plus profond de la fente d'emboîtement (17), c'est-à-dire à distance des bords libres (22) des nervures (15, 16), sont disposées des nervures transversales (20) qui se succèdent à un certain écartement mutuel selon la périphérie, et qui réunissent ces nervures (15, 16) dans la direction transversale (s), étant venues de matière avec elles, et forment des étais de tension.

4. Appuie-tête selon la revendication 3, caractérisé en ce que les nervures transversales (20) et les nervures d'étayage (23, 24) sont décalées ou disposées en quinconce.

5. Appuie-tête selon une des revendications 1 à 4, caractérisé en ce que les surfaces étroites (21 ; 25) des nervures transversales (20) et des nervures d'étayage (23, 24) qui sont dirigées vers l'extérieur ont une forme concave dans leur direction longitudinale.

FIG.1

FIG. 2

FIG. 3